# EUROPEAN PATENT SPECIFICATION

(11) **EP 2 602 369 B1**
(45) Date of publication and mention of the grant of the patent: **14.05.2014**
(21) Application number: 12195832.6
(22) Date of filing: 06.12.2012
(51) Int. Cl.: D04H 1/60, D04H 1/736, D04H 1/4218, D04H 1/4226, B65G 15/24, B65G 23/12, B65G 45/12, B65G 45/14, B65G 45/16, B65G 45/22, B65G 45/26

(54) **Apparatus for manufacturing glass chopped strand mat**
Vorrichtung zur Herstellung einer Glasfaserschnittmatte
Appareil de fabrication d'un matelas de fils de verre coupés

(30) Priority: 09.12.2011 JP 2011270452
(43) Date of publication of application: 12.06.2013
(73) Proprietor: NIPPON ELECTRIC GLASS CO., LTD, Otsu-shi, Shiga 520-8639 (JP)
(72) Inventor: SEKO, Tsuyoshi, OTSU-SHI, SHIGA, 520-8639 (JP)
(74) Representative: Berbinau, Pierre Jean Marie

(56) References cited:
- EP-A1- 0 013 868
- EP-A2- 0 170 639
- JP-A- 2002 333 363
- JP-A- 2009 256 866
- JP-A- 2011 099 189
- JP-A- 2011 099 190
- JP-U- H0 488 410
- US-A- 5 439 096

## Description

### TECHNICAL FIELD

The present invention relates to apparatuses for manufacturing a glass chopped strand mat by shaping glass chopped strands into a sheet.

### BACKGROUND ART

A glass chopped strand mat is conventionally used as a reinforcement member in a glass fiber reinforced plastic (GFRP) molded product, such as a bathtub or a septic tank. The glass chopped strand mat is also employed as a reinforcement base in a car molded ceiling material.

The glass chopped strand mat is manufactured, for example, using a manufacturing apparatus described in Patent Document 1, as follows. Initially, a glass fiber is cut into pieces having a predetermined length to obtain glass chopped strands. Next, the glass chopped strands are distributed and deposited on conveying means such as a conveyor to form a sheet. The glass chopped strands are subjected to a plurality of steps while being conveyed by a plurality of conveyors. For example, the steps include spraying a binder to the glass chopped strands, heating the glass chopped strands to which the binder adheres, and cooling and pressing the glass chopped strands after the heating, and the like. The glass chopped strand mat produced by these steps is wound around a core into a roll by a winding machine or the like before shipment. Thus, the glass chopped strand mat is manufactured by subjecting the glass chopped strands to a plurality of steps while the glass chopped strands are being conveyed by a plurality of conveyors.

### CITATION LIST

### PATENT DOCUMENT

Patent Document 1: Japanese Unexamined Patent Application Publication No. 2009-256866

### DISCLOSURE OF THE INVENTION

### PROBLEM TO BE SOLVED BY THE INVENTION

In recent years, advances in weight reduction of products including the glass chopped strand mat have led to an increasing demand for a glass chopped strand mat having light weight (as used herein, the term "weight" with respect to a glass chopped strand mat refers to mass per unit area) which contains a reduced amount of glass chopped strands which are a material for the glass chopped strand mat (a glass chopped strand mat having light weight is also referred to as a "lightweight glass chopped strand mat"). When the lightweight glass chopped strand mat is manufactured, it is necessary to place an exact desired amount of glass chopped strands on the conveyors while improving the efficiency of production. However, part of the glass chopped strands may drop when moving between each conveyor. The reasons why some glass chopped strands drop are that the gap between each conveyor is larger than the size of the glass chopped strands, that the difference in height between each conveyor is large when the glass chopped strands are moved between each conveyor, and the like.

During the manufacture of the glass chopped strand mat, as described in Patent Document 1, typically, water is sprayed to the glass chopped strands so that the glass chopped strands are wetted, before a binder is sprayed thereto. As a result, the binder is allowed to easily adhere to surfaces of the glass chopped strands due to the surface tension of the water. However, the wetted glass chopped strands also easily adhere to the conveyor, and therefore, even when the glass chopped strands reach the downstream end of the conveyor, some glass chopped strands may continue to adhere to that conveyor without moving to the next conveyor, and may pass through the gap between these conveyors.

The loss of the glass chopped strands dropping or passing through the conveyor gap directly leads to a decrease in yield, i.e., a deterioration in the production efficiency of the glass chopped strand mat, and therefore, should be reduced to the extent possible. Also, as described above, when a lightweight glass chopped strand mat is manufactured, then if the loss of the glass chopped strands increases, the desired thickness or density (weight) (i.e., desired quality) may not be obtained.

In this regard, Patent Document 1 does not teach or suggest the problem that part of the glass chopped strands drops through the conveyor gap or the problem that part of the glass chopped strands continues to adhere to a conveyor without moving to the next conveyor. Therefore, for the manufacturing apparatus of Patent Document 1, there is large room for improvement in the production efficiency and quality of the glass chopped strand mat.

Thus, at present, adequate measures have not yet been taken to improve production efficiency and quality for the glass chopped strand mat manufacturing apparatus. The present invention has been made in view of the above problems. It is an object of the present invention to provide a glass chopped strand mat manufacturing apparatus which includes conveyors (conveying means) which are configured to allow the apparatus to manufacture a glass chopped strand mat with an improved production efficiency and quality.

### MEANS FOR SOLVING PROBLEM

To achieve the object, a glass chopped strand mat manufacturing apparatus according to claim 1 is provided.

As described in the PROBLEM TO BE SOLVED BY THE INVENTION section, in the conventional art, measures have not been taken to reduce the loss of glass chopped strands dropping between the conveyors or the loss of glass chopped strands attached to the conveyors. This is because conventional glass chopped strand mat manufacturing apparatuses are not particularly directed to manufacture of a lightweight product.

In this regard, in the glass chopped strand mat manufacturing apparatus of this configuration, the first roller is provided downstream of the first conveying means and the second roller is provided upstream of the second conveying means (where the conveying direction of the glass chopped strands is defined as a flow direction), and the diameter of the first roller is set to be smaller than or equal to that of the second roller. As a result, the radius of curvature of the first roller is smaller than that of the second roller, and therefore, the first roller can be positioned in the vicinity of the second roller. As a result, a gap between the first conveying means and the second conveying means can be reduced. The reduction in the radius of curvature of the first roller also allows a smaller difference in height between the first conveying means and the second conveying means. As a result, when the glass chopped strands are moved from the first conveying means to the second conveying means, the glass chopped strands can be prevented from bouncing due to a drop between the conveying means and dropping from the conveying means. In addition, the reduced gap between the conveying means can prevent the glass chopped strands from dropping through the gap. Moreover, the smaller radius of curvature of the first roller allows the glass chopped strands to easily come off the first conveying means when reaching the downstream end of the first conveying means. Therefore, the amount of the glass chopped strands which continue to be attached to the first conveying means and pass through the gap between the conveying means without moving to the second conveying means, is reduced. Therefore, the loss of dropping or attached glass chopped strands can be reduced. As a result, the efficiency of production of a glass chopped strand mat can be improved. In particular, when a lightweight glass chopped strand mat is manufactured, the desired weight can be more easily achieved, and therefore, an improvement in the quality can be expected.

In the glass chopped strand mat manufacturing apparatus of the present invention, the diameter of the first roller is preferably set to 50 to 100 mm.

As described above, in the glass chopped strand mat manufacturing apparatus, water is sprayed to the glass chopped strands before the first conveying means sprays the binder, so that the binder is allowed to more easily adhere to surfaces of the glass chopped strands due to the surface tension of the water. However, another problem arises that it is more difficult for the glass chopped strands to come off the first conveying means due to the sprayed water.

In this regard, in the glass chopped strand mat manufacturing apparatus of this configuration, the diameter of the first roller is set to 50 to 100 mm. This diameter is sufficiently small compared to conventional manufacturing apparatuses. As a result, the glass chopped strands more easily come off the first conveying means at the downstream end of the first conveying means. Also, the difference in height between the first conveying means and the second conveying means can be further reduced. Therefore, when the glass chopped strands are moved from the first conveying means to the second conveying means, the glass chopped strands can be reliably prevented from bouncing due to the drop between the conveying means and dropping from the conveying means, and from dropping through the gap between the conveying means.

In the glass chopped strand mat manufacturing apparatus of the present invention, a separation distance between the first roller and the second roller is preferably set to 5 to 10 mm.

According to the glass chopped strand mat manufacturing apparatus having this configuration, the separation distance between the first roller and the second roller is set to 5 to 10 mm. As a result, the glass chopped strands can be more reliably prevented from dropping from the conveying means when the glass chopped strands are moved from the first conveying means and the second conveying means.

In the glass chopped strand mat manufacturing apparatus of the present invention, the first roller is preferably supported by an auxiliary roller provided below the first roller, where the auxiliary roller preferably has a diameter larger than that of the first roller.

According to the glass chopped strand mat manufacturing apparatus having this configuration, the first roller is supported by an auxiliary roller provided below the first roller, where the auxiliary roller has a diameter larger than that of the first roller. Therefore, the first roller can be prevented from bending or warping due to the weight of the first conveying means or the like. As a result, the conveying speeds of the first conveying means and the second conveying means can be increased, and the frequency of maintenance can be reduced. Therefore, the efficiency of production of the glass chopped strand mat can be further increased.

The glass chopped strand mat manufacturing apparatus of the present invention preferably includes removal means for removing residue adhering to a surface of at least one of the first and second rollers.

According to the glass chopped strand mat manufacturing apparatus having this configuration, residue (e.g., a portion of the binder) adhering to surfaces of the first and second rollers can be removed by the removal means. Therefore, the frequency of maintenance of the first conveying means and the second conveying means can be reduced, whereby the efficiency of production of the glass chopped strand mat can be increased.

In the glass chopped strand mat manufacturing apparatus of the present invention, air blowing means is preferably provided in a surface of the first roller.

According to the glass chopped strand mat manufacturing apparatus having this configuration, the air blowing means is provided in a surface of the first roller. Therefore, the glass chopped strands attached to the first conveying means can be more easily taken off the first conveying means by the force of air blown at the downstream end of the first conveying means. Therefore, the glass chopped strands can be reliably moved from the first conveying means to the second conveying means.

In the glass chopped strand mat manufacturing apparatus of the present invention, the amount of air blown by the air blowing means is preferably 50 to 300 m³/hr.

According to the glass chopped strand mat manufacturing apparatus having this configuration, the amount of air blown by the air blowing means is 50 to 300 m³/hr. The glass chopped strands can be reliably taken off the first conveying means at the downstream end of the first conveying means without being excessively blown away.

### BRIEF DESCRIPTION OF THE DRAWINGS

[FIG. 1] FIG. 1 is a diagram schematically an overall configuration of a glass chopped strand mat manufacturing apparatus according to the present invention.
[FIG. 2] FIG. 2 is a partially enlarged view schematically showing a position relationship between a first roller included in first conveyor means and a second roller included in second conveyor means in the present invention.
[FIG. 3] FIG. 3 is a partially enlarged schematic diagram showing a position relationship between a first roller including air blowing means, and removal means which removes residue adhering to a surface of the second roller.

### DESCRIPTION OF EMBODIMENTS

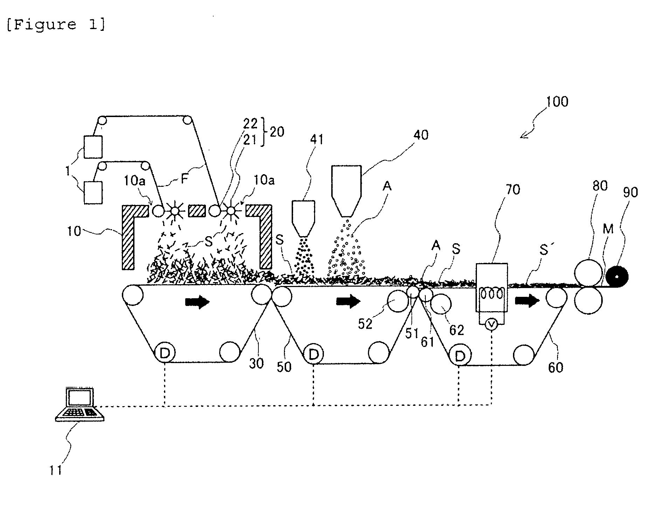

A glass chopped strand mat manufacturing apparatus according to the present invention will be described hereinafter with reference to FIGS. 1 to 3. Note that the present invention is not intended to be limited to embodiments described below or configurations shown in the drawings.

### <Overall Configuration of Glass Chopped Strand Mat Manufacturing Apparatus>

FIG. 1 is a diagram schematically an overall configuration of an apparatus 100 for manufacturing a glass chopped strand mat (hereinafter simply referred to as a "manufacturing apparatus") according to the present invetion. An arrow shown in FIG. 1 indicates a direction in which glass chopped strands are conveyed.

The manufacturing apparatus 100 manufactures the glass chopped strand mat M from the glass chopped strands S. The manufacturing apparatus 100 includes a chamber 10, a cutting device 20, a distribution conveyor 30, a binder spraying device 40, a first conveyor (first conveying means) 50, a second conveyor (second conveying means) 60, a heating furnace 70, a cold press roller 80, a winding machine 90, and the like. Of these components, the first and second conveyor 50 and 60 are essential to the present invention.

The distribution conveyor 30 and the first and second conveyors 50 and 60 are successively positioned in this stated order from upstream to downstream. These conveyors are driven by respective motors D. The conveying speeds (the movement speeds of the belts) of the conveyors are controlled by a computer (control means) 11. Note that a worker may manually adjust the conveying speed of each conveyor as appropriate.

The distribution conveyor 30 includes a belt on which the glass chopped strands S are distributed and put. The distribution conveyor 30 is positioned below the chamber 10 which accommodates the glass chopped strands S. The cutting device 20 which cuts a glass fiber F described below is attached to a glass fiber inlet 10a provided at a ceiling portion of the chamber 10. The cutting device 20 includes a cutter roller 21 and a rubber roller 22. The glass fiber F which has been pulled out of a glass cake 1 is fed into between the rotating cutter roller 21 and rubber roller 22 to be continually cut, whereby the glass chopped strands S are produced. The glass chopped strands S fall by their own weight in the chamber 10 and are substantially uniformly distributed and put on the belt of the distribution conveyor 30.

The binder spraying device 40 is provided above the first conveyor 50. The binder spraying device 40 sprays a binder A toward the glass chopped strands S on the belt of the first conveyor 50. The spraying of the binder A to the glass chopped strands S allows the glass chopped strands S to stick together by a heating treatment described below, whereby the glass chopped strands S can be maintained in the shape of a mat. A water sprayer which sprays water is provided above or below the first conveyor 50 and upstream of the binder spraying device 40. In this embodiment, a water sprayer 41 is provided above the first conveyor 50. The water sprayer 41 sprays water toward the glass chopped strands S on the first conveyor 50. If the glass chopped strands S are previously wetted with water, the binder A more easily adheres to the surfaces of the glass chopped strands S due to the action of the surface tension of the water, and therefore, the glass chopped strands S stick together more effectively.

A vibrator (not shown) may be provided below the belt of the first conveyor 50 on which the glass chopped strands S are deposited. The belt of the first conveyor 50 may be vibrated by the vibrator. This causes the binder A sprayed to the surfaces of the glass chopped strands S to enter gaps between the glass chopped strands S which have been deposited to form a sheet. As a result, the binder A adheres uniformly to all the glass chopped strands S. The glass chopped strands S on the first conveyor 50 are conveyed to the downstream second conveyor 60 with the binder A uniformly adhering to the glass chopped strands S.

The heating furnace 70 is provided halfway through the second conveyor 60, surrounding the belt. The glass chopped strands S with the binder A on the second conveyor 60 enter the heating furnace 70. The temperature of atmosphere in the heating furnace 70 is controlled by the computer 11 to be appropriately adjusted to a temperature higher than or equal to the melting point of the synthetic resin included in the binder A, depending on the type of the sprayed binder A. Note that the temperature of the heating furnace 70 may be manually adjusted by a worker. The glass chopped strands S with the binder A are subjected to the heating treatment, whereby the binder A is softened and melted. As a result, the glass chopped strands S stick together (the glass chopped strands S after being heated are referred to as "glass chopped strands S'" to discriminate from those before being heated). Because the belt of the second conveyor 60 is thus exposed to high temperature, the belt is formed of a heat resistant material, such as a metal.

The cold press roller 80 including a pair of rollers is provided downstream of the second conveyor 60. The glass chopped strands S' which have been subjected to the heating treatment are cooled and pressed by the cold press roller 80, whereby the glass chopped strand mat M is produced. The glass chopped strand mat M thus produced is wound around the core of the winding machine 90 provided downstream of the cold press roller 80, into a roll product.

<Configuration of Main Portion of Glass Chopped Strand Mat Manufacturing Apparatus>

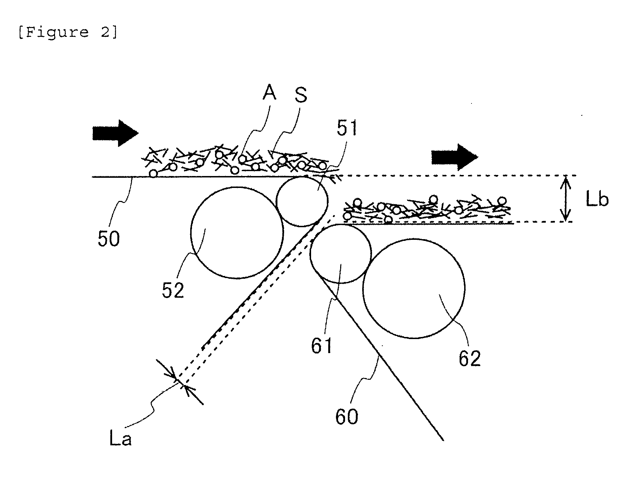

FIG. 2 is a partially enlarged view schematically showing a position relationship between a first roller 51 included in the first conveyor 50 and a second roller 61 included in the second conveyor 60 in the present invention. An arrow shown in FIG. 2 indicates a direction in which the glass chopped strands S are conveyed by the first and second conveyors 50 and 60. When the conveying direction is defined as a flow direction, the first roller 51 is provided at a downstream end of the first conveyor 50, and the second roller 61 is provided at an upstream end of the second conveyor 60. The first roller 51 is supported by a first auxiliary roller 52 which is provided below the first and second rollers 51 and 61 is supported by a second auxiliary roller 62 which is provided below the second roller 61. Here, a position relationship and a size relationship between the first and second rollers 51 and 61 are characteristic features of the present invention. These relationships will be described in detail hereinafter with reference to FIG. 2.

When the glass chopped strands S are moved from the downstream end of the first conveyor 50 to the upstream end of the second conveyor 60, part of the glass chopped strands S may drop through a gap La between the first and second conveyors 50 and 60. The loss of the dropping strands S leads to a decrease in product yield. To solve this problem, in this embodiment, the diameter of the first roller 51 is set to be smaller than or equal to that of the second roller 61. As a result, the radius of curvature of the first roller 51 is smaller than that of the second roller 61. Therefore, as shown in FIG. 2, the downstream end of the first conveyor 50 can be positioned closer to the upstream end of the second conveyor 60 while being positioned above the upstream end of the second conveyor 60, whereby the gap La between the first and second conveyors 50 and 60 can be reduced. A difference Lb in height between the first and second conveyors 50 and 60 can also be reduced. Moreover, the reduction in the radius of curvature of the first roller 51 causes a larger change in a direction in which a belt looped around the first roller 51 moves (vector change amount), at the downstream end of the first conveyor 50 at which the first roller 51 is provided. As a result, the glass chopped strands S more easily come off the first conveyor 50.

The diameter of the first roller 51 needs to be smaller than or equal to that of the second roller 61, and is preferably set to 50 to 100 mm. The diameter of 50 to 100 mm of the first roller 51 is smaller than that of conventional first rollers. Therefore, the first roller 51 has a sufficiently small radius of curvature, and therefore, the height difference Lb between the first and second conveyors 50 and 60 is reduced. Therefore, a drop (= Lb) between the first and second conveyors 50 and 60, through which the glass chopped strands S move (fall) from the first conveyor 50 to the second conveyor 60, can be further reduced.

As described above, the water sprayer 41 sprays water to the glass chopped strands S on the first conveyor 50. Therefore, the wetted glass chopped strands S are firmly attached to the surface of the first conveyor 50 due to the surface tension. In conventional glass chopped strand mat manufacturing apparatuses, measures have not been taken to actively take the glass chopped strands S off the first conveyor 50. However, in this embodiment, the diameter of the first roller 51 is set to 50 to 100 mm, which is smaller than that of the conventional art, whereby the radius of curvature of the first roller 51 is sufficiently reduced. As a result, the change in the movement direction (vector change amount) of the belt looped around the first roller 51 is increased at the downstream end of the first conveyor 50, whereby the glass chopped strands S more easily come off the first conveyor 50. As a result, the glass chopped strands S can be reliably prevented from passing through the gap La between the first and second conveyors 50 and 60 while being firmly attached to the first conveyor 50. If the diameter of the first roller 51 is set to be smaller than 50 mm, the first roller 51 may be bent or warped due to the weight and tensile force of the belt of the first conveyor 50. On the other hand, if the diameter of the first roller 51 is set to be larger than 100 mm, the change in the movement direction (vector change amount) of the belt looped around the first roller 51 cannot be increased to a very large extent, and therefore, it is likely to be difficult for the glass chopped strands S to come off the first conveyor 50.

A distance by which the first and second rollers 51 and 61 are separated from each other, i.e., the gap La between the first and second conveyors 50 and 60, is preferably set to 5 to 10 mm. The fiber length of the glass chopped strands S is typically about 50 mm, although it varies depending on the product. In order to reliably prevent the glass chopped strands S having a fiber length of about 50 mm from dropping through the gap La between the conveyors, the separation distance (= La) between the first and second rollers 51 and 61 may be set to 10 mm or less. Note that the separation distance (= La) is set to be smaller than 5 mm, residue is likely to stick to the roller surface as described below, so that clogging is likely to occur in the gap between the first and second rollers 51 and 61. Therefore, the lower limit of the separation distance (= La) is preferably 5 mm.

A belt is looped around each of the first and second rollers 51 and 61. The belt is typically looped around a position in the vicinity of the middle in the longitudinal direction of the roller. Therefore, the first and second rollers 51 and 61 are each easily bent or warped downward in the vicinity of the middle thereof due to the tensile force of the belt. The first and second rollers 51 and 61 are each an elongated object, and therefore, may be bent or warped downward in the vicinity of the middle thereof due to their own weight. Therefore, the first and second auxiliary rollers 52 and 62 are provided below the first and second rollers 51 and 61 to support the first and second rollers 51 and 61, whereby the first and second rollers 51 and 61 are prevented from being bent or warped downward. Therefore, the first and second auxiliary rollers 52 and 62 are required to have high stiffness, and therefore, have larger diameters than those of the first and second rollers 51 and 61, respectively. Note that, in the present invention, in particular, the first roller 51 has a smaller diameter, and therefore, the first roller 51 more easily bend or warp than the second roller 61. Therefore, while the first auxiliary roller 52 is preferably provided, the second auxiliary roller 62 may be removed if the second roller 61 has a sufficiently large diameter.

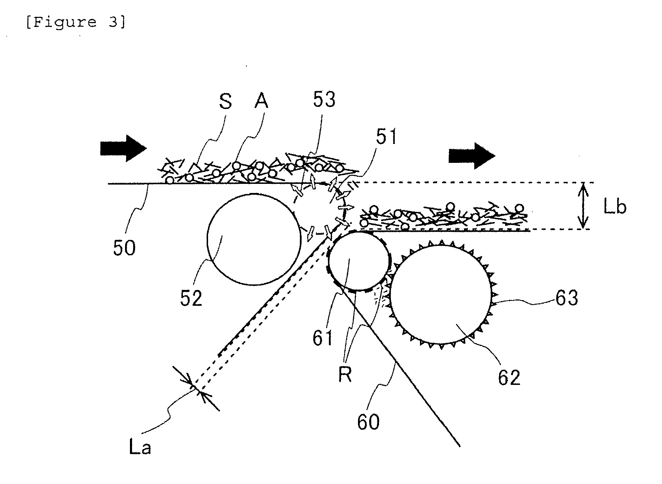

Incidentally, not all the binder A sprayed to the glass chopped strands S necessarily adheres to the glass chopped strands S. A small portion of the binder A may adhere to the first and second conveyors 50 and 60. If a portion of the binder A is accumulated on a surface of the belt or the roller, the accumulated binder A (residue R) may interfere with the manufacture of the glass chopped strand mat. Therefore, in this embodiment, measures are taken to remove the residue R. FIG. 3 is a partially enlarged schematic diagram showing a position relationship between the first roller 51 including air blowing means 53, and removal means 63 which removes the residue R adhering to a surface of the second roller 61, in the present invention. In FIG. 3, closed arrows indicate the conveying direction of the first and second conveyors 50 and 60, and open arrows indicate an air blowing direction of the the air blowing means 53. The residue R mainly includes the binder A and also includes dust etc. adhering to the glass chopped strands S or the conveyors. The residue R adheres to the surfaces of the first and second rollers 51 and 61 to form an adverse bump on the surfaces of the rollers or increase the overall diameters of the rollers. In this situation, if the manufacture of the glass chopped strand mat M is continued, a rough surface or wrinkles may be formed on the glass chopped strand mat M.

As shown in FIG. 3, the removal means 63 for removing the residue R according to this embodiment is configured as a blade 63 which is provided on a surface of the second auxiliary roller 62 which supports the second roller 61. When the second auxiliary roller 62 is rotating while contacting a surface of the second roller 61, the residue R adhering to the surface of the second roller 61 can be removed by the blade 63. Note that the removal means 63 for removing the residue R may be in other forms. For example, a plate-shaped blade (not shown) for removing or scraping the residue R adhering to the surface of the second roller 61 may be provided at a position which is close to the surface of the second roller 61 and is different from the second auxiliary roller 62. While, in this embodiment, the removal means 63 for removing the residue R is provided only for the second roller 61, removal means may also be provided for the first roller 51. In this case, the frequency of maintenance of the first and second rollers 51 and 61 can be further reduced.

The glass chopped strands S are moved from the downstream end of the first conveyor 50 to the upstream end of the second conveyor 60. As described above, the water sprayer 41 provided above the first conveyor 50 sprays water to the glass chopped strands S, and therefore, the glass chopped strands S may be firmly attached to the first conveyor 50 due to the surface tension of the water. In this embodiment, the air blowing means 53 is provided in order to eliminate the firm attachment to allow the glass chopped strands S to easily come off the first conveyor 50. The air blowing means 53 is provided, as air blowing pores 53 for blowing air, in a surface of the first roller 51. In this case, the first roller 51 is connected to a compressed gas cylinder, a blower, etc. (not shown) so that air is supplied to the inside of the first roller 51. The supplied air is blown out through the air blowing pores 53. The air blown out through the air blowing pores 53 lifts up the glass chopped strands S on the first conveyor 50 to eliminate the firm attachment of the glass chopped strands S to the first conveyor 50. While, in this embodiment, the air blowing pores 53 are illustrated as the air blowing means 53, the air blowing means 53 only needs to be configured to blow air uniformly in the longitudinal direction of the first roller 51, and the present invention is not limited to the form of the air blowing pores 53 of this embodiment. The belt loop around the first conveyor 50 preferably has a net-like structure. In this case, air can be allowed to efficiently strike the glass chopped strands S from below the glass chopped strands S.

The amount of air blown may be appropriately adjusted based on the weight (mass per unit area) of the glass chopped strands S conveyed, and is preferably 50 to 300 m³/hr, more preferably 150 to 180 m³/hr. If the amount of air blown falls within this range, the glass chopped strands S can be caused to reliably come off the first conveyor 50 without excessively blowing the glass chopped strands S away. If the amount of air blown is smaller than 50 m³/hr, the firm attachment of the glass chopped strands S cannot be sufficiently eliminated. If the amount of air blown is larger than 300 m³/hr, the glass chopped strands S are scattered around, likely leading to a decrease in the yield of the final product, and in addition, non-uniform distribution of the glass chopped strands S, i.e., a decrease in quality. If the amount of air blown is 150 to 180 m³/hr, the firm attachment of the glass chopped strands S can be reliably eliminated, and the glass chopped strands S can be substantially prevented from being scattering around. Therefore, the yield of the final product can be further increased.

### [Examples]

Examples of the glass chopped strand mat manufacturing apparatus of the present invention will be described hereinafter.

In a test described below, the amounts of loss of glass chopped strands occurring when the glass chopped strands were moved from the first conveyor to the second conveyor were compared, where the diameter of the first roller was changed, and air blowing pores were present or absent in the surface of the first roller (Examples 1 to 4 and Comparative Examples 1 and 2). In the glass chopped strand mat manufacturing apparatus of Examples 1 to 4, the diameter of the first roller was 80 mm, the diameter of the second roller was 94 mm, and the gap and drop between the first and second conveyors were 7 mm and 30 mm, respectively. In Comparative Examples 1 and 2, a conventional manufacturing apparatus was used, where the diameter of the first roller was 130 mm, the diameter of the second roller was 94 mm, and the gap and drop between the first and second conveyors were 12 mm and 70 mm, respectively.

In Examples 1 and 2 and Comparative Example 1, the weight of the glass chopped strands conveyed was 100 g/m². In Examples 3 and 4 and Comparative Example 2, the weight of the glass chopped strands conveyed was 135 g/m². The first roller used in Examples 2 and 4 were of the same type as that of the first roller of FIG. 3, and the amounts of air blown were 150 m³/hr and 180 m³/hr, respectively. The amount (%) of loss of the dropping glass chopped strands was expressed as a percentage with respect to the amount (100%) of loss in Comparative Example 1 (weight: 100 g/m²) or Comparative Example 2 (weight: 135 g/m²), where Examples were compared with Comparative Examples having the same weight. Manufacture conditions and test results for Examples 1 to 4 and Comparative Examples 1 and 2 are shown in the following table 1.

**[Table 1]**

| | Ex. 1 | Ex. 2 | Ex. 3 | Ex. 4 | Com. Ex. 1 | Com. Ex. 2 |
|---|---|---|---|---|---|---|
| Weight of Glass Chopped Strands (g/m²) | 100 | 100 | 135 | 135 | 100 | 135 |
| Diameter of First Roller (mm) | 80 | 80 | 80 | 80 | 130 | 130 |
| Diameter of Second Roller (mm) | 94 | 94 | 94 | 94 | 94 | 94 |
| Gap between Conveyors (La: mm) | 7 | 7 | 7 | 7 | 12 | 12 |
| Difference in Height between Conveyors (Lb: mm) | 30 | 30 | 30 | 30 | 70 | 70 |
| Amount of Air Blown (m³/hr) | - | 150 | - | 180 | - | - |
| Amount of Loss of Dropping Strands (%) | 30 | 20 | 50 | 40 | 100 | 100 |

According to the above results, when the diameter of the first roller in the glass chopped strand mat manufacturing apparatus was 80 mm which is smaller than the diameter (94 mm) of the second roller, the amount of loss of the dropping glass chopped strands was reduced to 30 to 50% of that of Comparative Examples (conventional art). Moreover, when air blowing pores were provided in the surface of the first roller, the amount of loss of the dropping glass chopped strands was further reduced by 10%, i.e., to 20 to 40% of that of Comparative Examples.

### INDUSTRIAL APPLICABILITY

The glass chopped strand mat manufacturing apparatus of the present invention can minimize the loss of dropping glass chopped strands, and therefore, can improve the production efficiency and quality of a glass chopped strand mat. Therefore, the glass chopped strand mat can be preferably used in secondary products, such as car molded ceiling materials, interior materials for other vehicles, and interior materials for buildings and other structures.

### DESCRIPTION OF REFERENCE CHARACTERS

- 50: FIRST CONVEYOR (FIRST CONVEYING MEANS)
- 51: FIRST ROLLER
- 52: FIRST AUXILIARY ROLLER
- 53: AIR BLOWING PORE (AIR BLOWING MEANS)
- 60: SECOND CONVEYOR (SECOND CONVEYING MEANS)
- 61: SECOND ROLLER
- 62: SECOND AUXILIARY ROLLER
- 63: BLADE (REMOVAL MEANS)
- 100: GLASS CHOPPED STRAND MAT MANUFACTURING APPARATUS
- S: GLASS CHOPPED STRAND
- A: BINDER (RESIN POWDER)
- M: GLASS CHOPPED STRAND MAT
- La: GAP
- Lb: DIFFERENCE IN HEIGHT
- R: RESIDUE

## Claims

1. An apparatus (100) for manufacturing a glass chopped strand mat (M) by shaping glass chopped strands (S) into a sheet comprising:
first conveying means (50) for continuously conveying the glass chopped strands (S) in a distributed form while spraying resin powder (A) serving as a binder; and
second conveying means (60) for continuously conveying the glass chopped strands to which the resin powder (A) adheres while performing a heating treatment on the glass chopped strands (S) at a temperature higher than the melting point of the resin powder,
wherein
a first roller (51) is provided at the downstream end of the first conveying means (50) and a second roller (61) is provided at the upstream end of the second conveying means (60), where a conveying direction of the glass chopped strands (S) is defined as a flow direction, there is a gap between the first and second conveying means (50,60), and the apparatus (100) is **characterized in that** a diameter of the first roller (51) is set to be smaller than that of the second roller (61) and the downstream end of the first conveying means (50) is positioned above the upstream end of the second conveying means (60).

2. The apparatus (100) of claim 1, wherein
the diameter of the first roller (51) is set to 50 to 100 mm.

3. The apparatus (100) of claim 1 or 2, wherein
a separation distance between the first roller (51) and the second roller (61) is set to 5 to 10 mm.

4. The apparatus (100) of any one of claims 1 to 3, wherein
the first roller (51) is supported by an auxiliary roller (52) provided below the first roller (51), where the auxiliary roller (52) has a diameter larger than that of the first roller (51).

5. The apparatus (100) of any one of claims 1 to 4, comprising:
removal means for removing residue (R) adhering to a surface of at least one of the first (51) and second rollers (61).

6. The apparatus (100) of any one of claims 1 to 5, wherein
air blowing means (53) is provided in a surface of the first roller.

7. The apparatus (100) of claim 6, wherein
the amount of air blown by the air blowing means (53) is 50 to 300 m³/hr.

## Patentansprüche

1. Vorrichtung (100) zum Herstellen einer Glasfaserschnittmatte (M) durch Formen von Glasfasersträngen (S) in einen Bogen, umfassend:
erste Transportmittel (50) zum kontinuierlichen Transportieren der Glasfaserstränge (S) in einer verteilten Form, während als Bindemittel dienendes Harzpulver (A) versprüht wird, und
zweite Transportmittel (60) zum kontinuierlichen Transportieren der Glasfaserstränge, auf denen das Harzpulver (A) haftet, während eine Wärmebehandlung an den Glasfasersträngen (S) bei einer Temperatur durchgeführt wird, die höher ist als der Schmelzpunkt des Harzpulvers,
wobei eine erste Walze (51) am unteren Ende der ersten Transportmittel (50) vorgesehen ist und eine zweite Walze (61) am oberen Ende der zweiten Transportmittel (60) vorgesehen ist, wobei eine Transportrichtung der Glasfaserstränge (S) als eine Flussrichtung definiert ist, wobei eine Lücke zwischen den ersten und zweiten Transportmitteln (50, 60) vorhanden ist, und
wobei die Vorrichtung (100) **dadurch gekennzeichnet ist, dass**
ein Durchmesser der ersten Walze (51) kleiner eingestellt ist als der der zweiten Walze (61) und das untere Ende der ersten Transportmittel (50) oberhalb dem oberen Ende der zweiten Transportmittel (60) angeordnet ist.

2. Vorrichtung (100) nach Anspruch 1, wobei der Durchmesser der ersten Walze (51) auf 50 bis 100 mm eingestellt ist.

3. Vorrichtung (100) nach Anspruch 1 oder 2, wobei ein Trennanstand zwischen der ersten Walze (51) und der zweiten Walze (61) auf 5 bis 10 mm eingestellt ist.

4. Vorrichtung (100) nach einem der Ansprüche 1 bis 3, wobei die erste Walze (51) durch eine Hilfswalze (52) gestützt wird, die unter der ersten Walze (51) vorgesehen ist, wobei die Hilfswalze (52) einen Durchmesser aufweist, der größer als der der ersten Walze (51) ist.

5. Vorrichtung (100) nach einem der Ansprüche 1 bis 4, umfassend:
Entfernungsmittel zum Entfernen von Resten (R), die an der Oberfläche von wenigstens einer von den ersten (51) und zweiten (61) Walzen haftet.

6. Vorrichtung (100) nach einem der Ansprüche 1 bis 5, wobei Luftblasmittel (53) in einer Oberfläche der ersten Walze vorgesehen sind.

7. Vorrichtung (100) nach Anspruch 6, wobei die durch die Luftblasmittel (53) ausgestoßene Luftmenge zwischen 50 und 300 m³/h beträgt.

## Revendications

1. Appareil (100) destiné à fabriquer un matelas de fils de verre coupés (M) en mettant en forme des fils de verre coupés (S) en une feuille, comportant :
des premiers moyens de transport (50) destinés à transporter de manière continue les fils de verre coupés (S) sous une forme distribuée tout en projetant de la poudre de résine (A) servant de liant ; et
des deuxièmes moyens de transport (60) destinés à transporter de manière continue les fils de verre coupés auxquels la poudre de résine (A) adhère tout en réalisant un traitement de chauffage sur les fils de verre coupés (S) à une température plus élevée que le point de fusion de la poudre de résine,
dans lequel
un premier rouleau (51) est prévu à l'extrémité aval des premiers moyens de transport (50) et un deuxième rouleau (61) est prévu l'extrémité amont des deuxièmes moyens de transport (60), une direction de transport des fils de verre coupés (S) étant définie comme une direction d'écoulement, il y a un espace entre les premiers et deuxièmes moyens de transport (50, 60), et l'appareil (100) est **caractérisé en ce qu'**un diamètre du premier rouleau (51) est prévu pour être plus petit que celui du deuxième rouleau (61) et l'extrémité aval des premiers moyens de transport (50) est positionnée au-dessus de l'extrémité amont des deuxièmes moyens de transport (60).

2. Appareil (100) selon la revendication 1, dans lequel le diamètre du premier rouleau (51) est prévu à 50 à 100 mm.

3. Appareil (100) selon la revendication 1 ou 2, dans lequel une distance de séparation entre le premier rouleau (51) et le deuxième rouleau (61) est prévue à 5 à 10 mm.

4. Appareil (100) selon l'une quelconque des revendications 1 à 3, dans lequel le premier rouleau (51) est supporté par un rouleau auxiliaire (52) prévu au-dessous du premier rouleau (51), le rouleau auxiliaire (52) ayant un diamètre plus grand que celui du premier rouleau (51).

5. Appareil (100) selon l'une quelconque des revendications 1 à 4, comportant :
des moyens d'enlèvement destinés à enlever des résidus (R) qui adhèrent à une surface d'au moins l'un des premier (51) et deuxième rouleaux (61).

6. Appareil (100) selon l'une quelconque des revendications 1 à 5, dans lequel des moyens de soufflage (53) sont prévus dans une surface du premier rouleau.

7. Appareil (100) selon la revendication 6, dans lequel la quantité d'air soufflée par les moyens de soufflage d'air (53) est de 50 à 300 m³/h.
